# EUROPEAN PATENT APPLICATION

(11) **EP 4 643 646 A1**
(43) Date of publication of application: **05.11.2025**
(21) Application number: 25172271.6
(22) Date of filing: 24.04.2025
(51) Int. Cl.: A23G 9/12, A23G 9/22, A23G 9/30, B01F 35/92, A23B 2/40

(54) **PASTEURIZING MACHINE AND METHOD FOR TREATING LIQUID OR SEMI-LIQUID FOOD PRODUCTS**

(30) Priority: 30.04.2024 IT 202400009802
(71) Applicant: Ali Group S.r.l. - Carpigiani, 20063 Cernusco sul Naviglio, Milano (IT)
(72) Inventor: TASSI, Federico, 40122 BOLOGNA (IT); LAZZARINI, Roberto, 42100 REGGIO EMILIA (IT)
(74) Representative: Milli, Simone

(57) **Abstract**

A pasteurizing machine (1) for treating liquid or semi-liquid food base products, comprising:
- a container (2a, 2b) adapted to allow the liquid or semi-liquid base products to be processed and treated by pasteurization;
- a stirring device (3a, 3b), mounted inside the container (2a, 2b) and driven by drive means (4) to stir the mixture consisting of said liquid or semi-liquid base products;
- drive means (4), configured to drive the stirring device (3a, 3b);
- a thermal treatment system (5), comprising an exchanger (6) associated with the container (2a, 2b) to heat the mixture consisting of said liquid or semi-liquid base products inside said container (2a, 2b);
- at least one control unit (10), adapted to control the operation of said drive means (4);
**characterized in that** said drive means (4) comprise a brushless electric motor (9) provided with a rotor (7) comprising permanent magnets (18) for producing the magnetic field needed to generate the movement.

## Description

This invention relates to a machine and a method for treating liquid or semi-liquid food products such as, without loss of generality, base mixtures for ice creams, sorbets and frozen desserts.

In particular, this invention relates to the provision of a machine for mixing, pasteurizing and aging food products.

For simplicity, reference will hereinafter be made more often to a pasteurizing machine which is used for treating base products for the production of ice cream or the like, and which is possibly, but not necessarily, also equipped with means for subsequently dispensing the final product, without thereby limiting the scope of the invention to this specific example.

As is known, a pasteurizing machine is a device configured for mixing the ingredients of, and lowering the bacterial load contained in, a food product during the treatment for the production thereof.

Pasteurization involves heating the products to a temperature preferably between 65°C and 85°C for a predetermined length of time so as to determine thermal restructuring and minimize health risks due to pathogenic microorganisms sensitive to heat, such as vegetative bacteria, fungi and/or yeasts, but causing only a minimal change in the chemical, physical and organoleptic properties of the product treated.

While it is being heated, the mixture constituting the product being treated is stirred inside the container where the treatment is performed.

A pasteurizing machine generally comprises a container, configured to allow processing, or treating, the liquid or semi-liquid base products, and a stirrer, mounted therein, which is driven in rotation to mix the product during the different stages of the treatment process.

The container is heated by a suitable heating system, comprising a heat exchanger associated with the container and embodied by a pipe which is wound spirally around the outside wall of the container so as to heat the product inside the container without obstructing the rotation of the stirrer. The stirrer is driven in rotation by an electric motor connected to the stirrer shaft by transmission means such as, for example, reduction gear units, belts, chains, toothed wheels which allow motion to be transmitted to the stirrer according to a predetermined reduction ratio and through a mechanism which, if and when necessary, allows reversing the rotation direction.

The applicant has observed experimentally that discrete speed changes or reversal of rotation direction are useful aspects to consider for the purposes of homogenizing the temperature of the mixture, hence very important for the pasteurization treatment process.

However, such actions, applied to pasteurizing machines of the prior art described above, do not allow the percentage of air held within the mixture and the dispersion of solids in the mixture to be increased.

These aspects are fundamental for the subsequent stage of processing a finished product such as ice cream.

Indeed, it was found that increasing the viscosity of the mixture ensures that a higher percentage of air can be held within the mixture and the finished product (that is, what is known as the "overrun").

At the same time, it was found that when a powder is added to a liquid, especially if the powder is cohesive or hydrophobic, it tends to agglomerate or form lumps on the surface, resisting its wettability by the liquid. Consequently, optimized dispersion of the powder contributes to improving the end quality of the ice cream.

Moreover, traditional motors, connected to the stirrer which they have to drive, are characterized by a very low torque-inertia ratio, hence high torques are needed to obtain starting and speed variations (in discrete intervals) in a reasonably acceptable time frame. This leads to the use of overdimensioned motors where such motors, under steady-state operating conditions, are not necessary (in terms of required performance), which in turn means unjustified costs and dimensions.

It should also be noted that, in prior art machines, the presence of a mechanism for reversing the rotation direction of the stirrer involves greater constructional complexity.

A pasteurizing machine that is bulky is therefore relatively inflexible, low performing and, above all, unable to increase the viscosity of the food product (hence the overrun percentage of the mixture) and to prevent the formation of solid lumps and agglomerates in the liquid mixture.

There is a need to have a pasteurizing machine that can prevent the formation of lumps and agglomerates when powder needs to be added to the mixture.

Moreover, there is a particularly strong need for a pasteurizing machine that can significantly increase the overrun percentage of the mixture, making it possible to improve the quality of the final product.

The aim of this invention is to meet the above-mentioned needs, that is to say, to provide a pasteurizing machine for producing liquid or semi-liquid products and a pasteurizing method, which allow reducing lumps of powder or solid material in the liquid mixture, thus obtaining a high-quality mixture.

Another aim of the invention is, generally speaking, to provide a pasteurizing machine for producing liquid or semi-liquid food products and a pasteurizing method, where processing efficiency and the quality of the final product are improved.

According to the invention, these aims are achieved by a pasteurizing machine for producing liquid or semi-liquid food products and a pasteurizing method, where said machine and method comprise the technical features set out in one or more of the appended claims.

The features of the invention, with reference to the above aims, are clearly described in the claims below and its advantages are more apparent from the detailed description which follows, with reference to the accompanying drawings which illustrate a preferred, non-limiting embodiment of the invention by way of example.

In particular:
- Figure 1 schematically illustrates a pasteurizing machine of this invention, in a first embodiment of it;
- Figure 2 schematically illustrates a pasteurizing machine of this invention, in a second embodiment of it;
- Figure 3 shows a schematic cross sectional view of a motor used in the machine of this invention;
- Figure 4 shows a perspective view of some of the components of the machine of this invention;
- Figure 5 shows a schematic plan view of a motor illustrated in Figure 4. With reference to the accompanying drawings, the numeral 1 denotes a pasteurizing machine for thermally treating (that is, pasteurizing) liquid or semi-liquid food products.

The pasteurizing machine is, generally speaking, intended to be used for thermally treating products such as ice creams, sorbets, frozen desserts and the like, as well as savoury creams, sauces, soups and mixtures in general, that is to say, all such liquid or semi-liquid products which need to be subjected to a pasteurizing treatment during the process for their production.

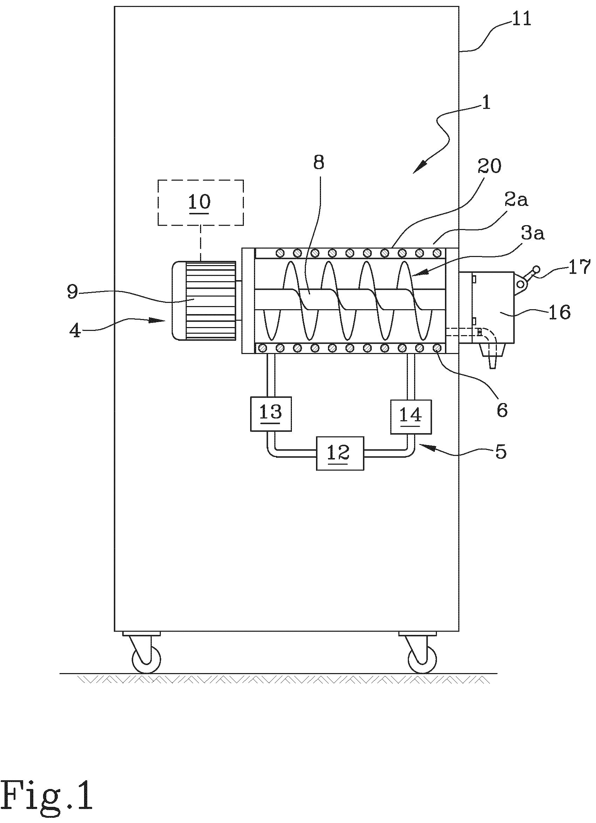

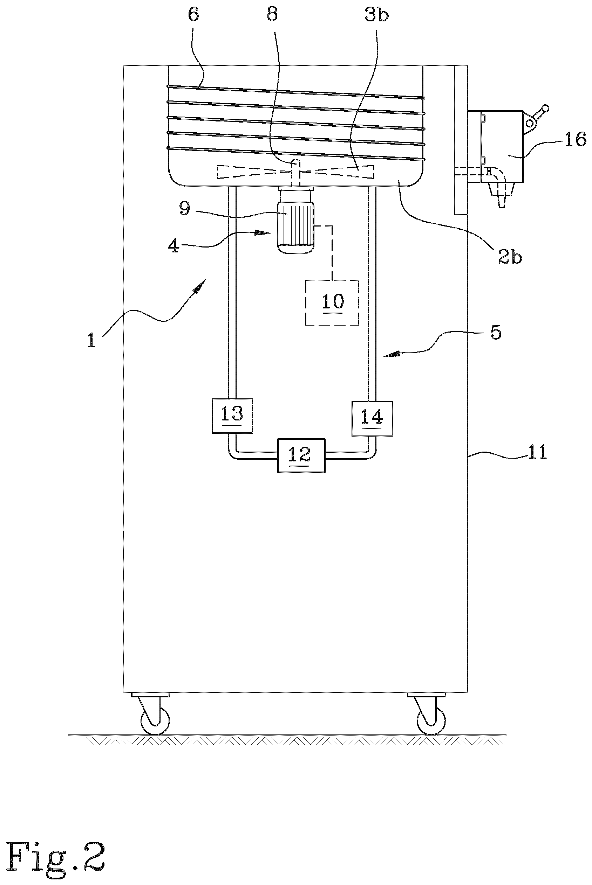

In Figures 1 and 2, the machine 1 is schematically represented in its entirety, showing only its outer casing 11 (or outer frame), it being understood, however, that such a representation refers to an exemplary embodiment which is in no way intended as limiting the scope of the invention.

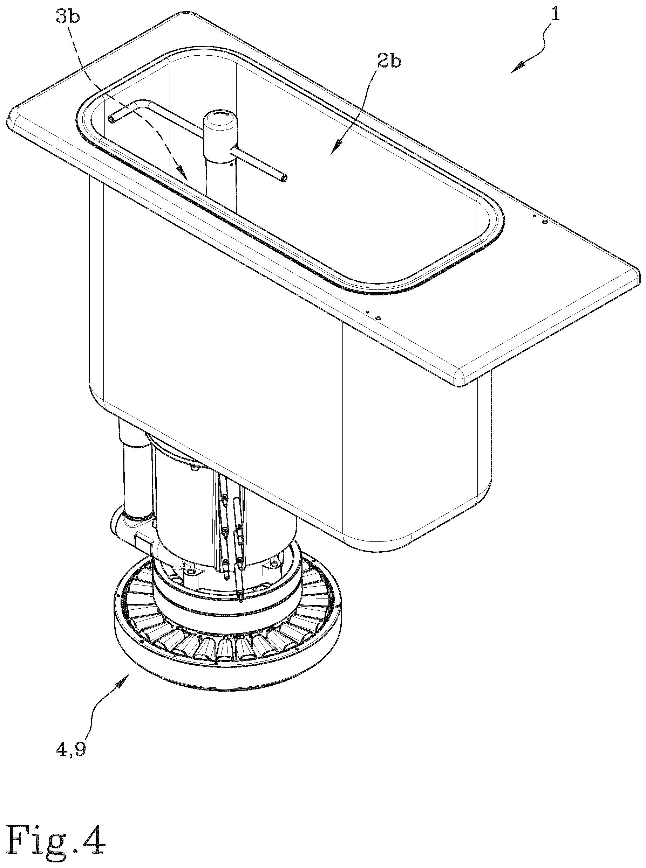

Figure 4, on the other hand, shows some of the components of the machine illustrated in Figure 1.

The pasteurizing machine 1 has been represented inside the frame 11 in two possible constructional configurations, both intended solely as examples, the difference between them being made apparent hereinafter. In both Figures 1 and 2, the pasteurizing machine 1 comprises a container 2a, 2b, adapted to allow processing the liquid or semi-liquid base products, not illustrated in the drawings, which are fed into the container directly or, preferably, through conveying means (e.g. hoppers), accessible from the outside of the casing 11 and not illustrated, since they are not relevant to the invention.

Processing the liquid or semi-liquid base products inside the container 2a, 2b allows performing a pasteurizing treatment to obtain liquid or semi-liquid finished products.

For this purpose, the container 2a, 2b is internally provided with a stirring device 3a, 3b that is driven by drive means 4 for stirring the mixture consisting of the liquid or semi-liquid base products.

More in detail, and in accordance with the invention, the drive means 4 are embodied by a brushless electric motor 9 whose rotor 7 comprises permanent magnets 18 for producing the magnetic field needed to generate the movement of the rotor 7 (when a magnetic field is applied). According to another aspect, the rotor 7 is connected directly to the stirring device 3a, 3b.

The brushless electric motor 9, thanks to simplified mechanics and total electronic control, can deliver torque which does not depend on the rotation speed and which remains high even at low speeds.

According to the invention, the stirring device 3a, 3b is driven in rotation by the rotor 7 of the direct-drive motor 9.

It was experimentally observed that using a motor 9 of the brushless type in the pasteurization process results in an increase in what, for an ice cream type product, is known as the overrun percentage (an increase in the amount of air held within the product) and improves powder dispersion.

This aspect, inclusive of the physical details at the basis of the technical effect, is described in more detail hereinafter.

The stirrer 3a, 3b is rotatable about a first axis of rotation 8.

The rotor 7 has a second axis of rotation (preferably coinciding with the first axis of rotation).

It should be noted that, in a first constructional variant, the two axes of rotation, first and second, are coaxial with each other.

Furthermore, preferably, the two axes of rotation, first and second, are connected directly to each other.

Advantageously, according to the embodiment just mentioned, no intermediate gears are used: the ratio is therefore direct and reversal of the rotational motion of the motor is made easier.

According to this aspect, the stirrer 3a, 3b has a respective first axis of rotation 8 connected directly to the rotor 7 of the motor 9.

Continuing with the description of the pasteurizing machine 1, the machine 1 comprises a thermal treatment system 5 (for heating and/or cooling). Preferably, the thermal treatment system 5 is of the thermodynamic type (that is to say, configured to operate according to a thermodynamic cycle). The system 5 comprises a heat exchanger 6, associated with the container 2a, 2b.

One of the functions of the thermal treatment system 5 is to heat the mixture consisting of the liquid or semi-liquid base products inside the container 2a, 2b.

Preferably, heating occurs at a temperature of between 65°C and 85°C, for a preset length of time, while the stirrer 3a, 3b stirs the mixture.

The thermal treatment system 5 comprises an additional heat exchanger 12, a compressor 13 and a pressure reducing valve 14.

The heating system 5 may also comprise other bypass branches to perform what is known as a hot gas cycle (thereby allowing heating to take place).

In other words, according to the aspect just mentioned, the thermal treatment system 5 is configured to alternatively perform an inverse Carnot cycle (saturated vapour compression cycle) and what is known as a hot gas cycle.

Preferably, the thermal treatment system 5 comprises a duct 15 containing a heat exchanger fluid.

Preferably, the thermal treatment system 5 operates according to at least one thermodynamic cycle (e.g. a heat exchanger vapour compression cycle and a hot gas cycle).

The heat exchanger 6 to which the duct 15 is connected may consist of a pipe 20 that is wound around the outside surface of the container 2a, 2b and connected to the thermal treatment system 5.

Alternatively, the thermal treatment system 5 is an electric heating system. According to this aspect, the heat exchanger 6 comprises one or more electrical resistors.

The machine 1 comprises a control unit 10 which, in particular, coordinates the operation of the drive means 4 - that is, of the motor 9 - to start it and determine its direction of rotation and operating speed. Preferably, therefore, the control unit 10 is configured to control the drive means 4, that is to say, the motor 9.

In the first constructional variant, illustrated in Figure 1, the container 2a is positioned in such a way that the stirring device 3a, mounted therein, and the rotor 7 of the motor 9 are both positioned with the axis of rotation horizontal.

In Figure 1, the container 2a is a cylinder.

In this case, the end of the container 2a opposite the motor 9 is adjacent to a side wall of the frame 11.

According to another aspect, the machine 1 comprises a dispenser 16, which allows drawing a quantity of product from the container 2a, 2b. Preferably, the dispenser 16 is provided with a lever 17 which, when operated, allows the product to be drawn.

In a second constructional variant, illustrated in Figure 2, the container 2b is positioned in such a way that the stirring device 3b, mounted therein, and the rotor 7 of the motor 9 are both positioned with the axis of rotation vertical.

In Figure 2, the container 2b is a tub.

In this case, as shown in Figure 2, the top of the container is at the same level as the top wall of the frame 11, while the dispenser 16 is located, for example, on the side wall (positioned at the height of the container 2b).

Instead of the dispenser 16, a conveyor or a duct (not illustrated in the drawings) may be provided to transfer the pasteurized product from the container 2a, 2b to other devices or appliances for further processing the product.

After such other devices or appliances, there may be another suitable type of dispenser or distributor.

The pasteurizing machine 1 described up to now allows implementing a method for pasteurizing liquid or semi-liquid food products which involves feeding liquid or semi-liquid base products into the container 2a, 2b where they are processed by pasteurization to obtain liquid or semi-liquid finished products.

In the container 2a, 2b, the mixture consisting of the liquid or semi-liquid base products are mixed (i.e. stirred) by a stirring device 3a, 3b by the brushless electric motor 9 which is connected to the stirring device 3a, 3b. The stirring device 3a, 3b comprises at least one vane and/or at least one scraping element and/or at least one helical element.

During mixing, the method comprises heating the mixture consisting of the liquid or semi-liquid base products inside the container 2a, 2b, preferably to a temperature of between 65°C and 85°C for a preset length of time (preferably between 1 minute and 50 minutes and still more preferably, between 2 minutes and 30 minutes) so as to obtain a pasteurized finished product.

According to another aspect, during the step of stirring the mixture, the electric motor 9 may be instructed to reverse the rotation direction of the rotor 7 so as to perform a plurality of stirring cycles in which the rotation direction of the stirrer 3a, 3b is reversed.

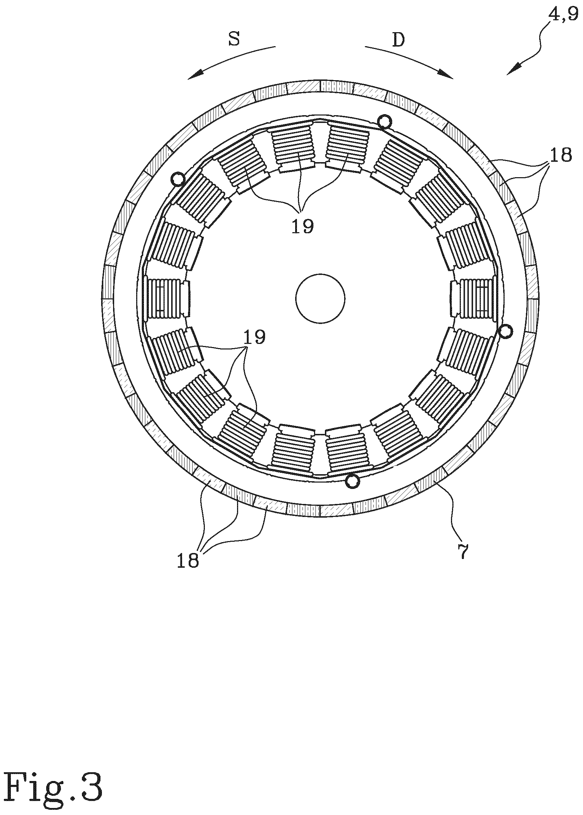

With reference to Figure 3, the brushless motor 9 comprises an (external) ring rotor which is the rotor 7 of the motor.

The rotor 7 comprises a plurality of permanent magnets 18 confronting a corresponding plurality of (electric) stator windings 19 (forming part of the motor 9), which are driven by the control unit 10 according to a predetermined switching sequence, in order to make the rotor 7 (that is, the permanent magnet ring) rotate in one direction D or in the other direction S, thereby causing a corresponding rotation of the stirrer 3a, 3b.

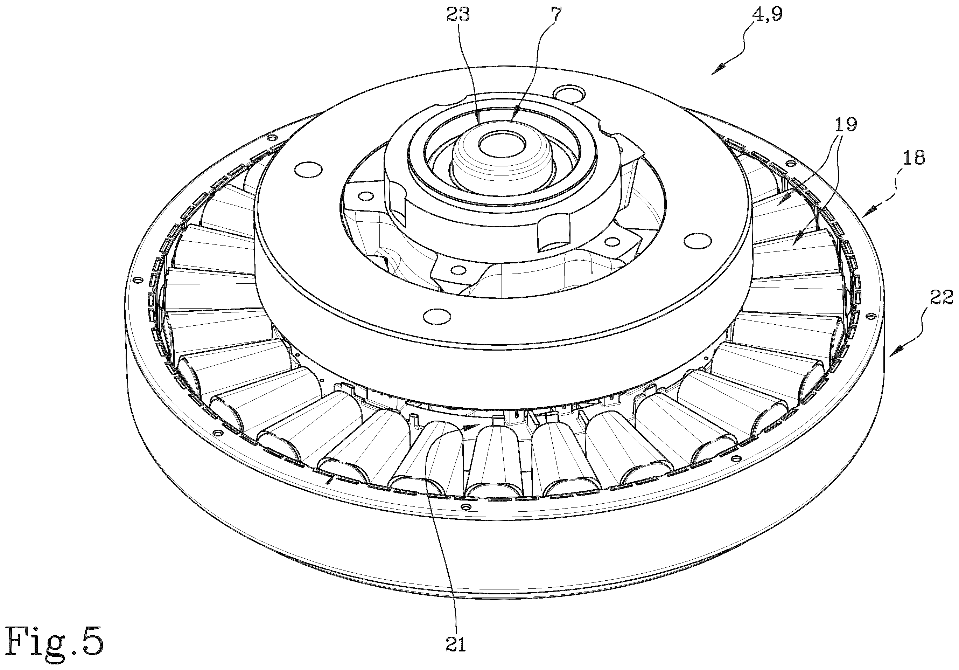

Figure 5 shows a specific embodiment of the motor 9.

The stator windings 19 are disposed in a stator casing 21 (fastenable to the frame 11).

It should be noted that the permanent magnets 18 are disposed in a rotor casing 22 (and are not shown in Figure 5).

More precisely, the permanent magnets 18 are disposed on the side walls of the rotor casing 22.

The rotor casing 22 is cylindrical in shape and, in particular, is without one of the base surfaces, thus defining an internal cavity.

In practice, the rotor casing 22 (in its internal cavity) houses the stator casing 21 (which, in use, is fastened to the frame 11).

The rotor casing 22 also has a hole at the centre of it, from which the shaft 23, connected (directly or indirectly) to the stirrer 3a, 3b, extends.

The ease with which the stator windings 19 can be switched makes it equally easy and very quick to vary the rotation speed of the rotor 7 and also, when necessary, to reverse the rotation direction.

Switching between the stator windings 19 is controlled by the control unit 10.

The constructional structure of the brushless motor 9 is much lighter in weight and smaller in size than conventional electric motors. Performance is further improved by the possibility of maintaining high torque even at low RPM, thus optimizing the process.

That way, for example, it is possible to make the helical element perform rotation cycles at different operating speeds in very quick time.

The applicant observed experimentally that applying a brushless motor 9 to the stirrer of a pasteurizing machine 1 optimizes the overrun obtainable by the mixture being treated.

The effect of increasing the percentage air held within the base mixture is important for many kinds of liquid or semi-liquid food products, in particular for ice cream type products, because it improves their quality.

There are thus evident advantages in using a motor of this kind in a pasteurizing process.

Generally speaking, there is a fundamental improvement in the quality of the pasteurized mixture obtained.

Described below are some specific advantages which the applicant has found through experimental tests conducted on pasteurizing machines made according to the invention, that is to say, machines equipped with the brushless motor 9.

Advantageously, the brushless electric motor 9 allows transmitting to the stirring device 3a, 3b, an intermittent, pulsed movement, known as "discontinuous rotation".

The first advantage of such an intermittent, pulsed movement (i.e. *cogging effect*) in the context of the pasteurizing machine 1 of this invention relates to the dispersion of powders in liquids.

It should be noted that the process of dispersing solid particles in a liquid medium should occur in as short a space of time as possible so that the powders do not float on the surface but sink into the liquid.

In a motor 9 of the brushless type, the cogging phenomenon, which is particularly marked if the motor is a "direct drive" motor, advantageously facilitates the dispersion and dissolution of the powders for the reasons described below.

When a powder is added to a liquid, especially if the powder is cohesive or hydrophobic, it tends to agglomerate or form lumps on the surface, resisting its wettability by the liquid.

If the stirrer is rotated continuously, as is the case in the prior art, the lumps are made to move but are not effectively broken.

Instead, the machine 1 of the invention, advantageously allows improving the wettability of the powders in the liquid mixture, particularly in the case of cohesive or hydrophobic powders in a liquid.

The discontinuous rotation of the motor 9 (due to the cogging effect of the brushless motor) means that the stirring motion starts and stops at micro-intervals.

The intermittent motion of the motor 9 is thus characterized by "on" and "off" steps, where the cogging effect causes rotation to start and stop in micro-pulses, and is particularly effective in stirring the mixture during the active stage by breaking the powder agglomerates.

This intermittent action advantageously prevents new agglomerates from forming during the resting stage, ensuring uniform dispersion of the particles in the liquid.

In effect, during the starting ("on" step) of the motor 9, that is, during the starting pulse of the motor 9, the stirrer rapidly agitates the mixture, creating shear forces which help to break the agglomerates of powder; when the stirring movement stops ("off" step), that is, during the stop pulse of the motor 9, the agglomerates are given the possibility of dispersing in the liquid because they are not constantly subjected to shear forces which could cause them to remain whole.

Preferably, according to an aspect, the motor 9 has a cogging effect of between 1% and 10%, preferably between 2% and 5% of the peak torque / force of the motor.

It should also be noted that continuous stirring, as in the prior art, may lead to the formation of new agglomerates when the powder particles, that is, the solid materials, collide with each other.

On the other hand, the intermittent stirring applied by the motor 9, with start and stop cycles due to the cogging effect, advantageously allows the powder particles to separate and prevents them from re-agglomerating. Moreover, the machine 1 of the invention advantageously allows offering a high level of control of the mixing process.

In effect, intermittent stirring allows accurate and precise control of the duration and intensity of the stirring cycles, which can be optimized for the specific combination of powder and liquid being processed.

To sum up, the discontinuous rotation (pulsed due to the cogging effect) of the stirrer 3a, 3b obtained via the motor 9:
- promotes the dispersion of powders in a liquid through a more controlled and efficient mixing process,
- helps break the agglomerates of the products being processed,
- prevents re-agglomeration,
- and allows customizing the mixing profile, leading ultimately to better dispersion and a more homogeneous mixture.

The following is another notable advantage of the invention.

The intermittent, pulsed motion of the brushless motor 9 (due to the aforementioned cogging effect), hence of the stirrer 3a, 3b, advantageously promotes overrun by forming gaseous cavities in the liquid mixture being processed.

In effect, during stirring, the rapid changes in pressure momentarily create regions of low pressure in the liquid mixture, thus facilitating the formation of small air bubbles.

Furthermore, during the stirring cycle, the air bubbles may be temporarily trapped in the liquid on account of the fluctuations in the speed of the motion or of the changes of direction.

This temporary capture of the bubbles further contributes to holding air within the liquid.

As already mentioned, in particular for food products of the ice cream type, the higher the percentage of air held within the product, the higher the overrun, which, as is known, is one of the parameters defining an indicator of the quality of the product, that is to say, it contributes to creating a quality product with optimum texture.

It is evident therefore how the machine 1 offers numerous advantages for the quality of the final product.

## Claims

1. A pasteurizing machine (1) for treating liquid or semi-liquid food base products, comprising:
- a container (2a, 2b) adapted to allow the liquid or semi-liquid base products to be processed and treated by pasteurization;
- a stirring device (3a, 3b), mounted inside the container (2a, 2b) and driven by drive means (4) to stir the mixture consisting of said liquid or semi-liquid base products;
- drive means (4), configured to drive the stirring device (3a, 3b);
- a thermal treatment system (5), comprising at least one exchanger (6) associated with the container (2a, 2b) to heat the mixture consisting of said liquid or semi-liquid base products inside said container (2a, 2b);
- at least one control unit (10), adapted to control the operation of said drive means (4);
**characterized in that** said drive means (4) comprise a brushless electric motor (9) provided with a rotor (7) comprising permanent magnets (18) for producing the magnetic field needed to generate the movement.

2. The pasteurizing machine according to claim 1, wherein said electric motor (9) is a direct-drive motor.

3. The pasteurizing machine according to claim 1 or 2, wherein said rotor (7) is connected directly to said stirring device (3a, 3b).

4. The pasteurizing machine (1) according to any one of the preceding claims, wherein said stirring device (3a, 3b) has a first axis of rotation (8) and said rotor (7) of said motor (9) has a second axis of rotation, said first and second axes of rotation being coaxial.

5. The pasteurizing machine (1) according to the preceding claim, wherein said first and second axes of rotation are directly connected to each other.

6. The pasteurizing machine (1) according to any one of claims 1 to 5, wherein said stirring device (3a, 3b) comprises at least one vane and/or one scraping element and/or one helical element, with a respective first axis of rotation (8) connected to the rotor (7) of said motor (9).

7. The pasteurizing machine (1) according to any one of claims 1 to 6, wherein said heat exchanger (6) comprises a pipe (20) coiled around the outside surface of said container (2a, 2b) and connected to said thermal treatment system (5).

8. The pasteurizing machine (1) according to any one of claims 1 to 7, wherein said stirring device (3a) and said rotor (7) of the motor (9) are both disposed with their respective axes of rotation horizontal.

9. The pasteurizing machine (1) according to any one of claims 1 to 7, wherein said stirring device (3b) and said rotor (7) of the motor (9) are both disposed with their respective axes of rotation vertical.

10. The pasteurizing machine (1) according to any one of claims 1 to 9, comprising dispensing means (16), connected to said container (2a, 2b), for dispensing said liquid or semi-liquid product.

11. The pasteurizing machine (1) according to any one of claims 1 to 10, wherein the motor (9) comprises a stator body (21) which houses electric stator windings (19), and wherein the rotor (7) and the stator body (21) are coaxial, the stator body (21) being also at least partly disposed inside the rotor (7).

12. The pasteurizing machine (1) according to any one of claims 1 to 11, wherein the motor (9) comprises a stator body (21) which houses electric stator windings (19), and a rotor body (22) to which the permanent magnets (18) are fixed, the stator body (21) being at least partly housed in the rotor body (22).

13. A method for pasteurizing liquid or semi-liquid food products, comprising:
- placing the liquid or semi-liquid base products into a container (2a, 2b) adapted to allow them to be processed;
- stirring the mixture consisting of said liquid or semi-liquid base products, carried out by a stirring device (3a, 3b) mounted inside the container (2a, 2b), and simultaneously heating said mixture consisting of said liquid or semi-liquid base products inside said container (2a, 2b);
**characterized in that** said step of stirring comprises driving said stirring device (3a, 3b) via a brushless electric motor (9) provided with a rotor (7) comprising permanent magnets (18) for producing the magnetic field needed to generate the rotational movement of the stirring device (3a, 3b).

14. The method according to the preceding claim, wherein, during said step of stirring, the rotor (7) of said electric motor (9) is connected directly to said stirring device (3a, 3b).

15. The method according to claim 13 or 14, wherein the step of heating said mixture comprises a step of heating said mixture consisting of said liquid or semi-liquid base products inside said container (2a, 2b) at a temperature of between 65°C and 85°C for a preset length of time.

16. The method according to any one of claims 13 to 15, comprising a step of stirring the mixture consisting of said liquid or semi-liquid base products inside said container (2a, 2b) via a stirring device (3a, 3b) comprising at least one vane and/or one scraping element and/or one helical element.
